# EUROPEAN PATENT APPLICATION

(11) **EP 0 706 284 A1**
(43) Date of publication of application: **10.04.1996**
(21) Application number: 95115704.9
(22) Date of filing: 05.10.1995
(51) Int. Cl.: H04N 1/44

(54) **Image communicating apparatus**

(30) Priority: 07.10.1994 JP 243575/94
(71) Applicant: MITA INDUSTRIAL CO. LTD., Osaka 540 (JP)
(72) Inventor: Shibata, Koichi, c/o Mita Industrial Co., Ltd., Osaka-shi, Osaka 540 (JP)
(74) Representative: Patentanwälte Beetz - Timpe - Siegfried Schmitt-Fumian - Mayr

(57) **Abstract**

An image communicating apparatus transmits hierarchy images. A transmitter converts a digital image successively into a plurality of hierarchy images respectively having resolutions which differ stepwisely. Data necessary to successively form higher hierarchy images from the lowest resolution image and data of the lowest resolution are outputted. At least one low hierarchy image among outputs of a transmission information former is enciphered. The transmission information including the enciphered image is transmitted to a predetermined transmission line in the order of from the lowest to the highest or from the highest to the lowest resolution images. A receiver reproduces the hierarchy images from image information obtained by deciphering a cipher and the transmission information.

## Description

### BACKGROUND OF THE INVENTION

### Field of the Invention

The present invention relates to an image communicating apparatus, and more particularly, to an image communicating apparatus for use in a facsimile machine which performs cipher communication.

### Description of the Prior Art

In recent years, as a new image communication service, soft copy communication such as database retrieval and audio graphic conference has attracted public attention. The soft copy communication is to display information by using a display screen at hand of the user. According to this communication, the information processing such as information reproduction, erasure and editing is easy, so that the communication is suitable for a hierarchical expression aiming at an early grasp of a general image.

Conventionally, as standard coding systems for binarized images, three systems: MH, MR and MMR are known. These systems are widely used for facsimile machines which perform hard copy communication. These three systems sequentially code an image from the top to the bottom and are unsuitable for use as a coding system for soft copy communication accompanied by a progressive (hierarchical) display. In addition, since these systems are designed for typical office images such as texts and graphs, they are not sufficiently adaptable to databases in which various images are expected to be stored.

For this reason, needs have come to be recognized for a standardization associated with a hierarchical transmission system suitable for a progressive build-up in which a schematic image is transmitted in an early stage and the quality of the image is gradually improved thereafter, and for a standardization of a coding system suitable for the progressive build-up and adaptable to various types of images. Such coding systems include a coding system standardized according to a joint bi-level image coding experts group (JBIG).

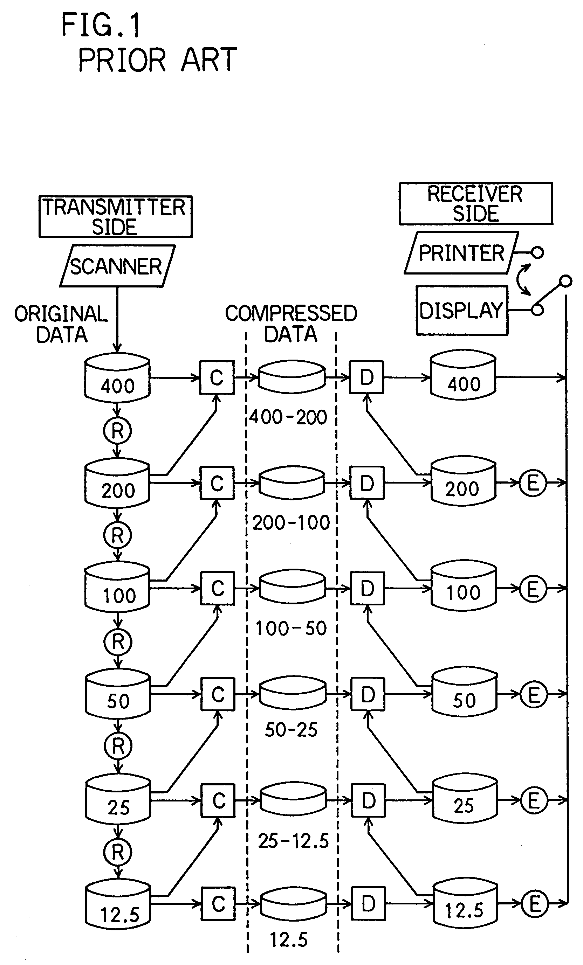

Referring to Fig. 1, there is shown the concept of a system to be standardized according to the JBIG. C represents coding. D represent decoding. R represents resolution conversion in reduction. E represents resolution conversion in enlargement. The numerical values represent resolutions (pixel/inch). Here, coding is defined as an arithmetic coding to maximize an entropy of image information.

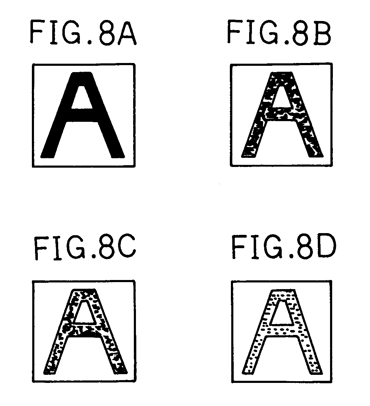

First, on the transmitter side, an original is read out by a scanner and converted into an original image with a resolution of approximately 400dpi. Then, low resolution images whose horizontal and vertical resolutions are both halved (200dpi → 100dpi → 50dpi → 25dpi → 12.5dpi) are successively produced. Examples of such low resolution images are shown in Figs. 8A to 8D. Fig. 8A shows an original image of 400dpi. Fig. 8B shows an image obtained by reducing the resolution of the original image of Fig. 8A to 200dpi. Fig. 8C shows an image obtained by reducing the resolution of the image of Fig. 8B to 100dpi. Fig. 8D shows an image obtained by further reducing the resolution of the image of Fig. 8C to 50dpi.

After resolution-reduced images are thus formed, first, on the transmitter side, the image of the lowest resolution is coded and transmitted. Then, only information necessary to successively improve the resolution is coded. On the receiver side, the images are decoded and reproduced in the order of from the lowest to the highest resolution images and the images whose resolutions are successively improved are displayed on the display screen or printed through a printer to realize a progressive display. While the original image decoded and reproduced without any degradation is obtained in the end, the display is sometimes ended when an image of an intermediate resolution is displayed when it is necessary to do so.

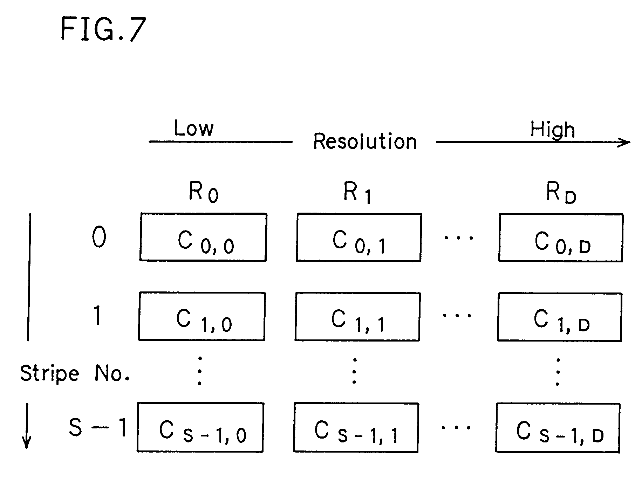

In the hierarchical coding according to the JBIG, a concept "stripe processing" as shown in Fig. 7 has been introduced in order to transmit an image both progressively and sequentially with a single database. Sequential transmission is realized by progressively transmitting an image in predetermined stripe units.

The order of data communication is as follows:
In the progressive transmission,
C_{0,0}, C_{1,0}, ···, C_{0,D}, C_{1,D}, ···, C_{S-1,D},
and in the sequential transmission,
C_{0,0}, C_{1,0}, ···, C_{S-1,0}, C_{S-1,1}, ···, C_{S-1,D}
(e.g. described in a paper "Hierarchical Coding System for Binary Images - JBIG Algorithm" on pages 41 to 49 of vol. 1 of Image Electronics Bulletin in 20 volumes).
However, the image communication using the JBIG algorithm described above causes the following problem:
Although no problems is caused in a stand-alone system such as a database retriever which retrieves an image from an optical disk media such as a compact disk read only memory (CD-ROM), when image information is retrieved or communicated through a line such as the telephone line, the ISDN line and the satellite communication line, since the JBIG algorithm is originally a standard open to the public and its decoding algorithm is known by ones having ordinary knowledge in the art, the communication can be easily intercepted even in a case such as confidential communication and fee-charging information retrieval service where the image data should be received only by a specific receiver.

### SUMMARY OF THE INVENTION

An object of the present invention is to provide an image communicating apparatus capable of transmitting image information only to a specific receiver.

An image communicating apparatus of the present invention is provided with: digital image forming means for digitizing an image to form a digital image; converting means for converting the digital image into a plurality of hierarchy images respectively having resolutions which differ stepwisely; transmission information forming means for outputting data necessary to form higher hierarchy images successively from an image of a lowest resolution and data of the lowest resolution; enciphering means for enciphering at least one lower hierarchy image among outputs of the transmission information forming means; and transmitting means for successively transmitting to a predetermined transmission line the transmission information including the enciphered image in an order of from a lowest to a highest or from a highest to a lowest resolution images.

### BRIEF DESCRIPTION OF THE DRAWINGS

This and other objects and features of this invention will become clear from the following description, taken in conjunction with the preferred embodiments with reference to the accompanied drawings in which:
Fig. 1 shows a reduction processing and an image communication by a conventional system according to a JBIG system;
Fig. 2 is a schematic block diagram showing the general arrangement of a facsimile machine embodying the present invention;
Fig. 3 is a block diagram showing a specific arrangement and a peripheral arrangement of a control unit of the embodiment of the present invention;
Figs. 4A and 4B are block diagrams showing examples of an enciphering circuit of the embodiment of the present invention;
Figs. 5A and 5B are flowcharts of communication operations of the embodiment of the present invention;
Fig. 6 is a conceptional view of a reduction processing and an image communicating system embodying the present invention according to the JBIG;
Fig. 7 is a conceptional view of a stripe processing according to the JBIG algorithm; and
Figs. 8A to 8D show examples of hierarchical images in the reduction processing according to the JBIG algorithm.

### DESCRIPTION OF THE PREFERRED EMBODIMENTS

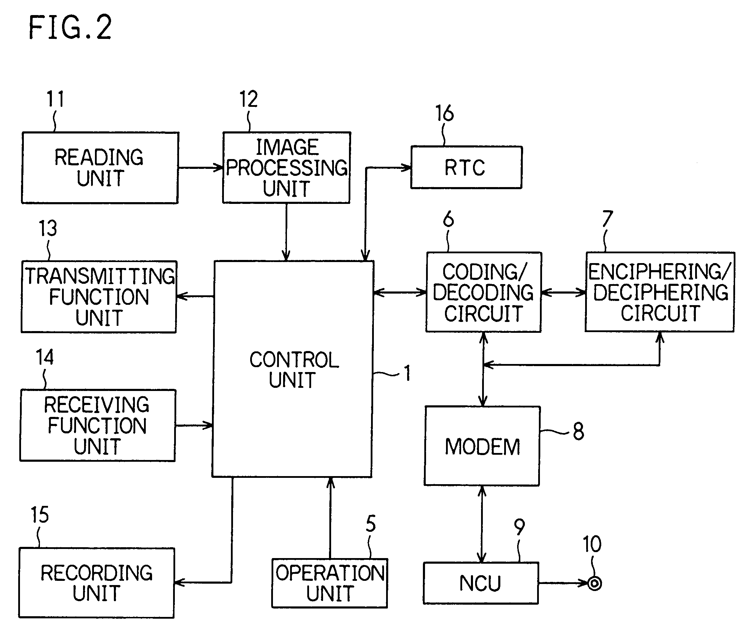

Hereinafter, an example where the JBIG algorithm is employed for a facsimile machine will be described with reference to the drawings. Referring to Fig. 2, there is shown a schematic block diagram of the general arrangement of a facsimile machine according to an embodiment of a communication apparatus of the present invention. Reference numeral 1 represents a control unit comprising a microcomputer and controlling the entire system.

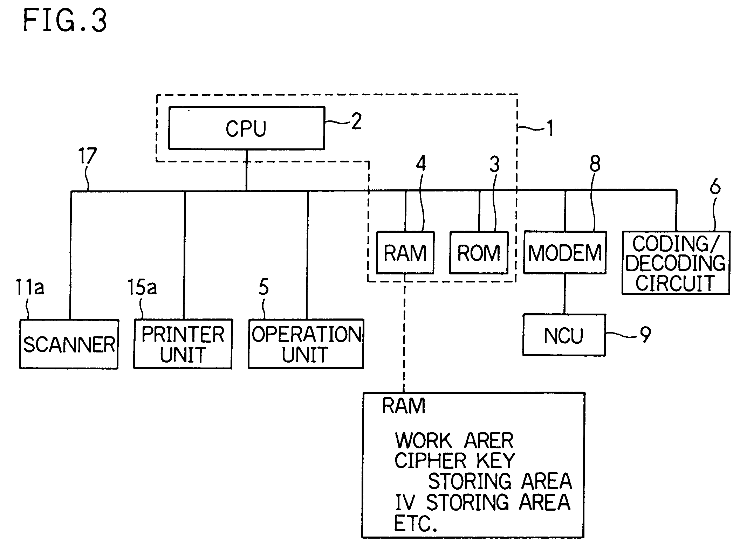

The control unit 1 includes, as shown in Fig. 3, a central processing unit (hereinafter, referred to as "CPU") 2, a memory device (hereinafter, referred to as ROM) 3 exclusively used for reading out a program, and a random access memory (hereinafter, referred to as "RAM") 4. As shown in Fig. 3, the RAM 4 is used as a storage area for storing an initial value (IV) in a CBC mode described later in detail and a cipher key K, and as a work area serving as a form of a storage area.

Returning to Fig. 2, reference numeral 5 represents an operation unit having an array of keys operated by the user. Reference numeral 6 represents a circuit for the coding/decoding according to the JBIG algorithm. The coding/decoding circuit 6 includes a digital signal processor (hereinafter, referred to as "DSP") incorporating a program for compression and expansion. Reference numeral 7 represents a enciphering/deciphering circuit which performs encipherment in the CBC mode when the facsimile machine operates as a transmitter and performs decipher when the facsimile machine operates as a receiver. Reference numeral 8 represents a modem. Reference numeral 9 represents a network control unit (NCU). Reference numeral 10 represents a telephone line.

Reference numeral 11 represents a reading unit having a scanner 11a for reading out an original. Reference numeral 12 represents an image processing unit which performs processing such as shading correction to the read-out image data. Reference numeral 13 represents a transmitting function unit. Reference numeral 14 represents a receiving function unit. Reference numeral 15 represents a recording unit having a printer unit 15a. Reference numeral 16 represents a real time clock (RTC). The operation unit 5, the enciphering/deciphering circuit 6, the modem 8, the NCU 9, the scanner 11a, the printer unit 15a are connected to the CPU 2 through a data bus 17 as shown in Fig. 3.

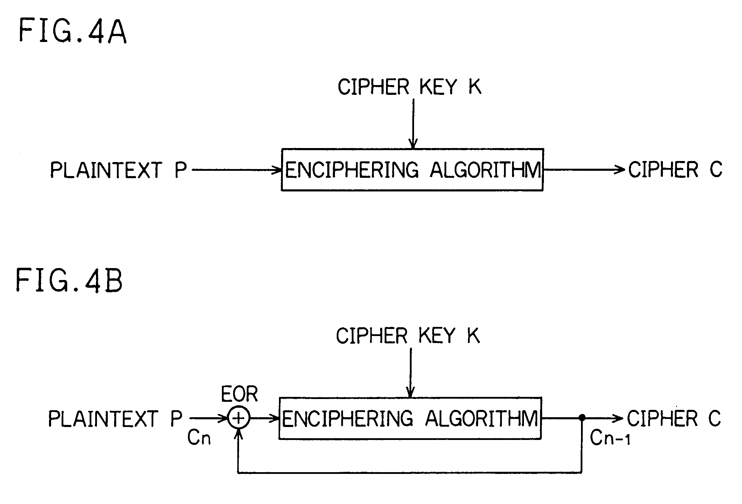

Referring to Figs. 4A and 4B, there are shown, as examples of the enciphering circuit 7, an example using an electric code book (ECB) in Fig. 4A and an example using a CBC (cipher block chaining) used in this embodiment in Fig. 4B. The examples of Figs. 4A and 4B both output a cipher C for a plaintext P by using a cipher key K. Here, the cipher key K is a numeric value of several figures.

In the ECB mode, as shown in Fig. 4A, the image data to be enciphered and the cipher correspond one to one. On the other hand, in the CBC mode, as shown in Fig. 4B, for example, when an *n*th plaintext Pₙ is enciphered, the exclusive OR (EOR) of a preceding cipher Cₙ₋₁ and the plaintext Pₙ is obtained and the result is enciphered. In this case, to encipher the first image data, since there is no preceding cipher, a secretly set initial value IV is used and the EOR of the initial value IV and a plaintext P₁ is obtained. In this embodiment, the CBC mode is used.

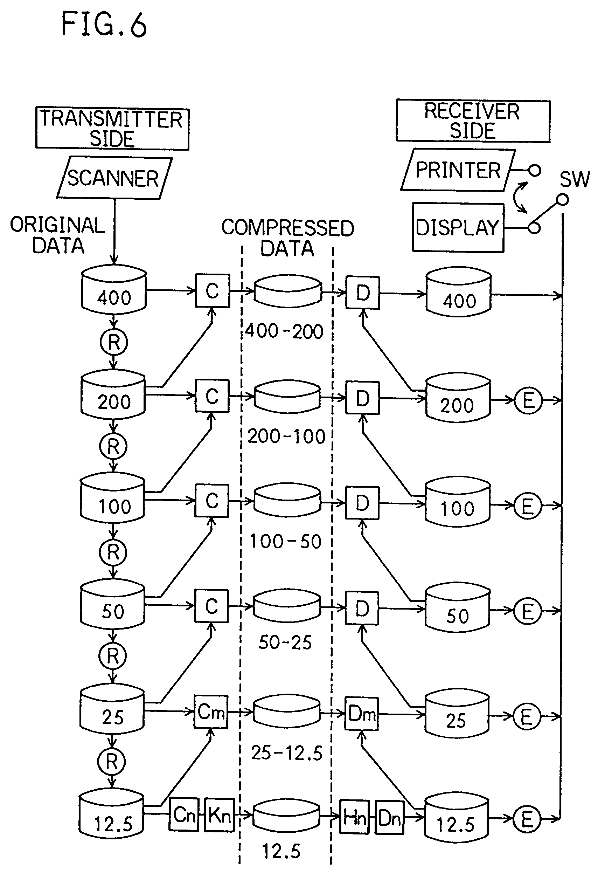

Referring to Fig. 6, there is shown a conceptional view of an image communicating system according to the JBIG embodying the present invention. Portions and elements the same as those of Fig. 1 are identified by the same reference designations. On the transmitter side, lowest resolution image data of 12.5dpi is coded at Cn and enciphered at Kn. On the receiver side, the enciphered image data is deciphered at Hn and decoded at Dn. Thereby, the lowest resolution image data is reproduced. The lowest resolution image data is added to one-hierarchy-higher image data decoded at Dm. The one-hierarchy-higher data transmitted from the transmitter side is the 25dpi image data from which a lowest resolution data component is removed. Therefore, the 25dpi image data is reproduced by adding the removed component on the receiver side. By successively performing this processing, higher hierarchy image data are successively reproduced. The image data of each hierarchy reproduced on the receiver side is supplied to a printer or a display through a switch SW.

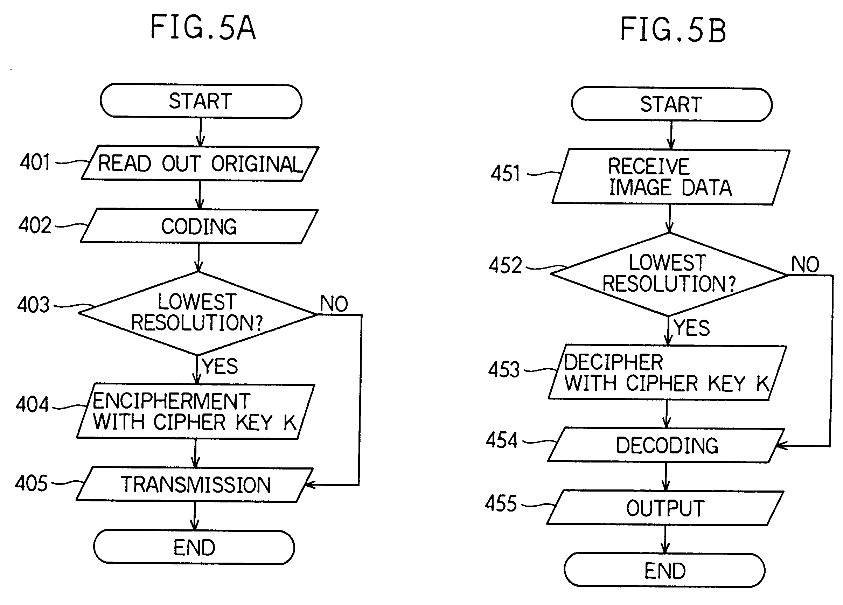

Referring to Figs. 5A and 5B, there are shown the flow-charts of operations of this embodiment. With reference to this figure, operations of this embodiment arranged described above will be explained. First, an operation performed by the transmitter side will be described. Fig. 5A shows a principal operation of the transmitter side.

When the user places an original on the reading unit 11 and inputs the telephone number of the receiver from the operation unit 5, a transmitting operation such as placing a telephone call to the receiver through the NCU 9 is started at step 401, and the original is read out by the scanner 11a and stored in the work area of the RAM 4.

Then, the original image data stored in the RAM 4 is coded at step 402. The coding algorithm used at this time is based on the previously-described JBIG algorithm. The original image data is converted by the DSP constituting the coding circuit 6 into six hierarchy image data where the resolution is successively halved and the hierarchy image data are stored in the work area of the RAM 4.

Then, a hierarchy image data of 12.5dpi having the lowest resolution of the six hierarchy image data is selected at step 403, and the lowest resolution hierarchy image data is enciphered with the cipher key K by the enciphering circuit 7 at step 404. The encipherment algorithm used at this time is that of the CBC mode.

Then, the enciphered lowest resolution hierarchy image data is transmitted to the telephone line 10 through the modem 8 and the NCU 9 at step 405. Then, the remaining five higher resolution hierarchy image data are transmitted to the telephone line 10 in the order of from the lowest to the highest resolution image data according to the rules of the JBIG algorithm shown in Fig. 6 like the enciphered lowest resolution hierarchy image data. With this, the processing performed by the transmitter side ends.

Subsequently, an operation performed by the receiver side will be described. Fig. 5B shows a principal operation of the receiver side. When an external transmission data is received and the telephone number of the transmitter is confirmed, the transmitted hierarchy image data are read in and stored in the work area of the RAM 4 at step 451. Then, the enciphered lowest resolution hierarchy image data transmitted first is selected at step 452.

After the cipher key K is read out from a cipher key storing area of the RAM 4 to decipher the lowest resolution hierarchy image data into a plaintext at step 453, the deciphered lowest resolution hierarchy image data is decoded according to the decoding algorithm of the JBIG algorithm at step 454. Then, the remaining higher resolution hierarchy image data are successively decoded according to the JBIG algorithm shown in Fig. 6.

When the resolution of the original image is restored through the processing from steps 452 to 454, the received image is printed out from the printer unit 15a incorporated in the recording unit 15 at step 455. With this, the receiving operation ends.

As described above, according to the present invention, a hierarchy image data having the lowest resolution of the six hierarchy image data converted according to the JBIG algorithm is enciphered and transmitted at steps 403 to 405, so that even though the higher resolution hierarchy image data are known, the transmitted image cannot be restored by intercepters unless the lowest resolution hierarchy image data on which the restoration is based can be restored. Thus, the security of the transmitted image data is protected.

Further, since only the lowest resolution hierarchy image data having the smallest data amount is necessarily enciphered, the time required for the encipherment processing is minimized.

While the original image data is converted into six hierarchy image data according to the JBIG in the above-description, the number of hierarchies is not limited to a specific number. Further, while application of the present invention to a facsimile machine is shown as an example, the present invention is applicable to a system such as an information retrieval system. In this case, the image data is not limited to the binary image data read out by an image scanner but may be a computer-synthesized multi-valued image data such as a CAD data.

Moreover, while only the lowest resolution hierarchy image data is enciphered, a higher resolution hierarchy image data may be enciphered. The object of the present invention is also achieved in this case since the restored image is unclear unless information on intermediate resolution hierarchy image data are not obtained.

Obviously, many modifications and variations of the present invention are possible in light of the above teachings. It is therefore to be understood that within the scope of the appended claims, the invention may be practiced other than as specifically described.

## Claims

1. An image communicating apparatus comprising:
digital image forming means (11) for digitizing an image to form a digital image;
converting means (6) for converting the digital image into a plurality of hierarchy images having resolutions which differ stepwisely;
transmission information forming means for outputting data necessary to form higher hierarchy images successively from an image of a lowest resolution and data of the lowest resolution;
enciphering means (7) for enciphering at least one lower hierarchy image among outputs of the transmission information forming means; and
transmitting means (8) for successively transmitting to a predetermined transmission line the transmission information including the enciphered image in an order of from a lowest to a highest or from a highest to a lowest resolution images.

2. An image communicating apparatus according to claim 1, wherein said digital image forming means binarizes an original image.

3. An image communicating apparatus according to claim 1, wherein said enciphering means enciphers a lowest resolution hierarchy image of the hierarchy images.

4. An image communicating apparatus comprising:
a transmitter which transmits a hierarchy image; and
a receiver which receives the hierarchy image to reproduce it,
wherein said transmitter comprising:
digital image forming means (11) for digitizing an image to form a digital image;
converting means (6) for converting the digital image into a plurality of hierarchy images respectively having resolutions which differ stepwisely;
transmission information forming means for outputting data necessary to form higher hierarchy images successively from an image of a lowest resolution and data of the lowest resolution;
enciphering means (7) for enciphering at least one lower hierarchy image among outputs of the transmission information forming means; and
transmitting means (8) for successively transmitting to a predetermined transmission line the transmission information including the enciphered image in an order of from a lowest to a highest or from a highest to a lowest resolution images, and
wherein said receiver comprising:
deciphering means for deciphering a cipher; and
reproducing means for reproducing the hierarchy images from deciphered image information and received transmission information.

5. A facsimile communication apparatus comprising:
a scanner (11) which reads out an original image;
hierarchy image foring means (6) for forming from a read-out image data a plurality of hierarchy images respectively having resolutions which differ stepwisely;
enciphering means (7) for enciphering a lowest resolution image of the hierarchy images; and
transmitting means (8) for transmitting to a telephone line an enciphered lowest resolution image and information necessary to successively form higher hierarchy data from the lowest resolution image.

6. A facsimile communication apparatus according to claim 5, wherein a resolution of a low resolution image formed by the hierarchy image forming means is 1/2ⁿ (n=1, 2, ...) a resolution of an image obtained by reading out by a scanner.

7. A facsimile communication apparatus according to claim 5, wherein data transmitted for a hierarchy image which is of higher hierarchy than the lowest resolution data are data obtained by subtracting one-hierarchy-lower image data from the data of the image.

8. An image communicating method comprising the steps of:
digitizing an image to form a digital image;
converting the digital image into a plurality of hierarchy images having resolutions which differ stepwisely;
outputting data necessary to form higher hierarchy images successively from an image of a lowest resolution and data of the lowest resolution;
enciphering at least one lower hierarchy image among outputs of the transmission information forming means; and
successively transmitting to a predetermined transmission line the transmission information including the enciphered image in an order of from a lowest to a highest or from a highest to a lowest resolution images.

9. A method according to claim 8, wherein said digital image forming means binarizes an original image.

10. A method according to claim 8, wherein said enciphering means enciphers a lowest resolution hierarchy image of the hierarchy images.
